# DEMANDE DE BREVET EUROPEEN

(11) **EP 0 623 966 A1**
(43) Date de publication de la demande: **09.11.1994**
(21) Numéro de dépôt: 94400973.7
(22) Date de dépôt: 04.05.1994
(51) Int. Cl.: H01Q 1/32, H01Q 3/04, H04B 1/08, H04B 1/38

(54) **Système de suppression de l'évanouissement sélectif de signaux reçus par une antenne**

(30) Priorité: 05.05.1993 FR 9305368
(71) Demandeur: ALCATEL MOBILE COMMUNICATION FRANCE, 75008 Paris (FR)
(72) Inventeur: Dupuy, Pierre, F-75014 Paris (FR)
(74) Mandataire: Renaud-Goud, Thierry

(57) **Abrégé**

L'invention concerne un système de réception de signaux radioélectriques. Le système comporte un récepteur (25) raccordé par des moyens de connexion (29) à une antenne (11) et des moyens (30) de détection d'un évanouissement sélectif de ces signaux radioélectriques qui coopèrent avec des moyens (28) de déplacement de l'antenne qui déplacent cette antenne (11) jusqu'à ce que l'évanouissement sélectif disparaisse.

L'invention s'applique notamment aux récepteurs embarqués dans des véhicules.

## Description

Le domaine de l'invention est celui des systèmes de réception de signaux radioélectriques. Plus précisément, la présente invention concerne un système permettant de supprimer l'évanouissement sélectif affectant des signaux reçus par une antenne, par exemple montée sur un véhicule.

L'invention s'applique notamment aux récepteurs de signaux tels que les radiotéléphones utilisés à l'intérieur de véhicules et raccordés à des antennes fixées sur les toits de ces véhicules.

Lorsque le véhicule d'un utilisateur de radiotéléphone est à l'arrêt, les signaux radioélectriques reçus au niveau de l'antenne de ce véhicule (raccordée au radiotéléphone) peuvent se sommer de manière constructive ou destructive. Ces signaux sont au moins au nombre de deux et l'un de ces signaux est par exemple issu d'une réflexion de l'autre signal sur un obstacle à la propagation tel qu'un bâtiment. Lorsque ces signaux se somment de façon constructive, ils sont en phase au niveau de l'antenne et la puissance du signal reçu est alors maximale. En revanche, une sommation de deux signaux en opposition de phase est destructive et la puissance du signal reçu est nulle. Ce phénomène est appelé l'évanouissement sélectif ou encore "fading" et la communication en cours est interrompue. L'interruption de communication peut durer un temps important si le véhicule est bloqué, par exemple entre deux voitures, à un feu rouge ou alors dans un embouteillage.

Une solution existante permettant de supprimer cet inconvénient est d'effectuer du saut de fréquences. Cette technique est par exemple décrite dans l'article "Keine Angst vor Funkschatten" de Herbert KNOLL paru dans la revue FUNKSCHAU AUTORADIO 24/1986. La fréquence porteuse du signal est changée fréquemment et on modifie donc sa longueur d'onde. L'évanouissement sélectif n'affectant pas les différentes fréquences porteuses de la même manière, la communication en cours a une faible probabilité d'être perturbée.

L'inconvénient du saut de fréquences est qu'il nécessite un canal de fréquences alloué à ces sauts de fréquences, véhiculant successivement les différentes fréquences porteuses. On peut également ne pas pouvoir utiliser le saut de fréquences à cause du manque de fréquences disponibles. De plus, l'émetteur et le récepteur doivent comporter des moyens de transposition de fréquence perfectionnés et donc coûteux.

L'article précité mentionne également la possibilité d'utiliser plusieurs antennes, cette technique étant appelée la diversité d'antennes. Son inconvénient est qu'il est nécessaire d'utiliser au moins deux antennes et que cela complique également la réalisation des récepteurs. Le récepteur doit notamment comporter des moyens de réception dédoublés et est donc plus complexe à réaliser.

La présente invention a notamment pour objectif de pallier ces inconvénients.

Plus précisément, un des objectifs de l'invention est de fournir un système permettant de remédier à l'évanouissement sélectif de signaux reçus par une antenne unique, sans mettre en oeuvre de saut de fréquences ou de technique de diversité d'antennes.

Cet objectif, ainsi que d'autres qui apparaîtront par la suite, est atteint grâce à un système de réception de signaux radioélectriques comportant un récepteur raccordé par des moyens de connexion à une antenne, ce système comportant des moyens de détection d'un évanouissement sélectif des signaux radioélectriques, ces moyens de détection coopérant avec des moyens de déplacement de l'antenne qui déplacent l'antenne jusqu'à ce que l'évanouissement sélectif disparaisse.

L'invention consiste donc à déplacer l'antenne pour supprimer l'évanouissement sélectif.

L'antenne raccordée au récepteur peut être indifféremment de type omnidirectionnel ou unidirectionnel.

Dans un mode de réalisation préférentiel, les moyens de déplacement déplacent l'antenne vers des positions d'arrêt prédéterminées. Ces positions d'arrêt prédéterminées sont préférentiellement distantes d'au moins λ/4, λ étant la longueur d'onde du signal radioélectrique de fréquence la plus basse pouvant être reçu par le récepteur.

Dans un mode de réalisation avantageux, les moyens de déplacement peuvent être constitués par un plateau supportant l'antenne, le plateau étant apte à être entraîné en rotation autour d'un axe par un moteur, l'antenne étant fixée sur le plateau à distance de l'axe. Le déplacement de l'antenne consiste donc dans ce cas en une rotation.

Les positions d'arrêt prédéterminées sont avantageusement décalées angulairement de 2π/(n+1) par rapport à une position de départ dans laquelle l'évanouissement sélectif se produit, n étant un entier au moins égal à deux.

Préférentiellement, deux de ces positions d'arrêt prédéterminées constituent des positions extrêmes de l'antenne.

Dans une application préférentielle, les moyens de déplacement de l'antenne sont montés sur un véhicule et l'antenne est située à l'extérieur de ce véhicule.

Le récepteur est avantageusement constitué par un radiotéléphone de type GSM qui comporte d'origine des moyens de détection d'un évanouissement sélectif.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 est une vue de côté schématique d'un véhicule automobile équipé du système de l'invention ;
- la figure 2 est une vue de côté d'un mode de réalisation préférentiel de l'invention ;
- la figure 3 est une vue de dessus du plateau support d'antenne des figures 1 et 2.

L'invention propose de détecter un évanouissement sélectif des signaux radioélectriques appliqués au récepteur et de déplacer en conséquences cette antenne jusqu'à ce que l'évanouissement sélectif disparaisse.

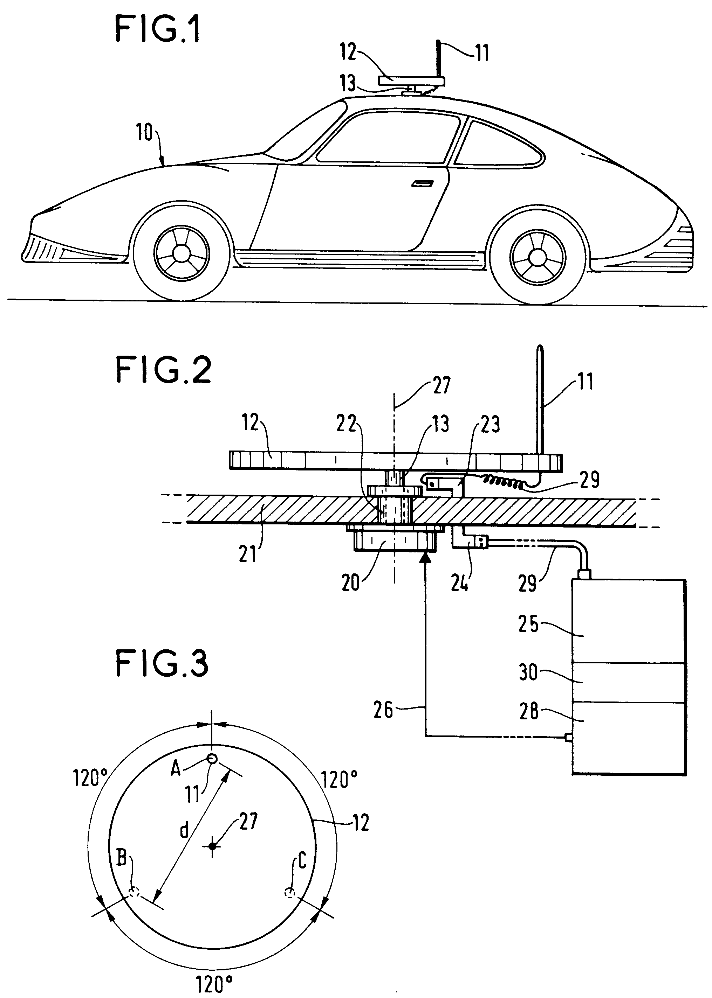

Une application intéressante est de déplacer l'antenne d'un véhicule lorsqu'un tel évanouissement sélectif se produit pour que cette antenne sorte de la zone d'ombre où les signaux radioélectriques se somment de façon destructive. A cet effet, comme représenté en figure 1, un véhicule automobile 10 comporte une antenne 11 raccordée à un récepteur de signaux radioélectriques, tel qu'un radiotéléphone portatif ou portable. L'antenne 11 est ici de type omnidirectionnel et fixée sur un plateau 12 support d'antenne pouvant être entraîné en rotation à l'aide d'un arbre 13.

Comme représenté à la figure 2, qui représente un mode de mise en oeuvre préférentiel de l'invention, l'antenne 11 est fixée sur le plateau support 12 monté à l'extrémité de l'arbre 13. Cet arbre 13 est entraîné en rotation par un moteur 20 fixé par des pattes non référencées à l'intérieur de l'habitacle du véhicule 10, contre le toit 21 de ce véhicule. Un joint d'étanchéité 22 est monté autour de l'arbre 13. L'antenne 11 est raccordée, par des moyens de connexion 29 constitués par un câble électrique, à une fiche 23, extérieure au véhicule, reliée à une fiche 24, intérieure au véhicule, à laquelle le récepteur 25, schématiquement représenté, est raccordé. Le câble 29 peut également être continu de l'antenne 11 au récepteur 25. Le récepteur 25 comporte des moyens 30 de détection de l'évanouissement sélectif du signal reçu par l'antenne 11. Lorsqu'un évanouissement sélectif est détecté, des moyens de commande 28, coopérant avec ces moyens de détection 30, pilotent, par une liaison 26, le moteur 20 pour modifier la position de l'antenne 11.

Ces moyens de détection 30 peuvent prendre comme critère de décision une puissance reçue inférieure à un seuil de puissance donné ou alors un taux d'erreur de transmission supérieur à un taux donné.

L'invention s'applique préférentiellement mais non exclusivement aux récepteurs de type GSM (Global System for Mobile Communications) qui comportent d'origine de tels moyens de détection.

La commande du moteur 20 peut être de différents types, l'essentiel étant que l'antenne 11 se déplace pour prendre des positions différentes de sa position d'origine dans laquelle l'évanouissement sélectif s'est manifesté.

Un premier mode de commande du moteur 20 consiste à faire tourner le plateau 12 jusqu'à ce que l'évanouissement sélectif disparaisse. Les moyens de connexion peuvent être constitués par un simple câble si l'excursion d'angle de rotation n'est pas trop important, et préférentiellement inférieur ou égal à 2π. On profite alors de la souplesse d'un câble suffisamment long pour raccorder l'antenne 11 au récepteur 25, comme représenté sur la figure 2.

Les moyens de connexion peuvent être constitués par un joint tournant si l'antenne est déplacée d'un angle supérieur à 2π. Ce joint tournant comporte par exemple un anneau métallique fixé sous le support 12, cet anneau étant en contact glissant avec l'antenne 11.

Dans un second mode de commande, dérivé du premier, l'antenne 11 est déplacée d'un angle prédéterminé, comme représenté en figure 3.

Sur cette figure le plateau 12 est circulaire et l'antenne 11 est dans une position de départ A, pouvant être considérée comme une position de repos. Le plateau 12 peut prendre deux autres positions B et C distantes de d par rapport à A et également entre elles. La distance d est au moins égale à λ/4, où λ est la longueur d'onde du signal radioélectrique de fréquence la plus basse pouvant être reçu par le récepteur 25. Les positions A, B et C sont décalées de 120°. Les moyens de commande 28 pilotent le moteur 20 de telle sorte que, lorsqu'un évanouissement sélectif se produit, l'antenne soit tout d'abord amenée en position B. Si l'évanouissement sélectif persiste, l'antenne 11 est amenée en position C. Ces trois positions d'antenne permettent de remédier à l'évanouissement sélectif dans de multiples configurations de signaux reçus et l'une d'elles est théoriquement celle où aucun évanouissement sélectif n'est observé. Si malgré tout au point C le phénomène d'évanouissement persiste, l'antenne est amenée au point B, et non pas au point A. Les points A et C sont donc les positions extrêmes de l'antenne 11. Ceci permet d'utiliser un simple câble de connexion de l'antenne au récepteur, et d'éviter l'utilisation d'un joint tournant. En cas de nouvel échec, l'antenne retourne au point A. L'antenne tourne donc des points A vers C et C vers A en passant par B.

Il est possible d'utiliser un capteur de déplacement du véhicule pour commander la mise en position A ou C de l'antenne lorsqu'un tel déplacement de véhicule se produit. Les positions A et C sont donc en définitive les positions de repos de l'antenne.

Bien entendu, le nombre de positions prédéterminées de l'antenne peut être supérieur à trois et, de façon générale, on peut prévoir n positions prédéterminées décalées angulairement par rapport à une position de départ de 2π/(n+1), n étant au moins égal à deux.

L'antenne 11 est préférentiellement perpendiculaire au plateau 12, cette position étant optimale pour la réception de signaux, et l'axe 27 est placé au milieu du plan défini par le toit du véhicule 10. Le plateau 12 a un diamètre d'environ 20 cm.

L'invention s'applique bien entendu également aux antennes unidirectionnelles. Dans le cas d'une antenne unidirectionnelle, on veillera cependant à maintenir son pointage en direction de l'émetteur pour conserver un gain de réception maximal.

Il est également possible de modifier la position d'une antenne montée ailleurs que sur un véhicule, par exemple sur un immeuble, les conditions atmosphériques, le climat (présence de feuilles sur les arbres) et les changements d'émetteur pouvant également provoquer un évanouissement sélectif au niveau d'un récepteur raccordé à une telle antenne.

Le déplacement de l'antenne n'est pas nécessairement circulaire et on peut également par exemple la déplacer suivant une droite. Le déplacement de l'antenne peut également consister à la faite pivoter autour d'un point fixe, par exemple lorsqu'il s'agit d'une antenne fouet. Un tel déplacement consiste donc en une inclinaison ou en une rotation.

Le principal avantage de l'invention est qu'il permet de masquer les effets d'évanouissement sélectif par déplacement d'une antenne unique raccordée à un récepteur.

## Revendications

1. Système de réception de signaux radioélectriques, ledit système comportant un récepteur (25) raccordé par des moyens de connexion (29) à une antenne (11), caractérisé en ce qu'il comporte des moyens (30) de détection d'un évanouissement sélectif desdits signaux radioélectriques, lesdits moyens (30) de détection coopérant avec des moyens (28) de déplacement de ladite antenne qui déplacent ladite antenne (11) jusqu'à ce que ledit évanouissement sélectif disparaisse.

2. Système selon la revendication 1, caractérisé en ce que ladite antenne (11) est de type omnidirectionnel.

3. Système selon la revendication 1, caractérisé en ce que ladite antenne est de type unidirectionnel.

4. Système selon l'une des revendications 1 à 3, caractérisé en ce que lesdits moyens de déplacement déplacent ladite antenne (11) vers des positions d'arrêt prédéterminées (A, B, C).

5. Système selon l'une des revendications 1 à 4, caractérisé en ce que lesdites positions d'arrêt prédéterminées (A, B, C) sont distantes d'au moins λ/4, λ étant la longueur d'onde du signal radioélectrique de fréquence la plus basse pouvant être reçu par ledit récepteur (25).

6. Système selon l'une des revendications 1 à 5, caractérisé en ce que lesdits moyens de déplacement sont constitués par un plateau (12) supportant ladite antenne (11), ledit plateau (12) étant apte à être entraîné en rotation autour d'un axe (27) par un moteur (20), ladite antenne (11) étant fixée sur ledit plateau (12) à distance dudit axe (27).

7. Système selon la revendication 6, caractérisé en ce que lesdites positions d'arrêt prédéterminées (A, B, C) sont décalées angulairement de 2π/(n+1) par rapport à une position de départ dans laquelle ledit évanouissement sélectif se produit, n étant un entier au moins égal à deux.

8. Système selon la revendication 7, caractérisé en ce que deux desdites positions d'arrêt prédéterminées (A, C) constituent des positions extrêmes de ladite antenne (11).

9. Système selon l'une des revendications 1 à 8, caractérisé en ce que lesdits moyens de déplacement (28) de ladite antenne (11) sont montés sur un véhicule (10) et en ce que ladite antenne (11) est située à l'extérieur dudit véhicule (10).

10. Système selon l'une des revendications 1 à 9, caractérisé en ce que ledit récepteur (25) est un radiotéléphone de type GSM.
